**Europäisches Patentamt**

**European Patent Office**

**Office européen des brevets**

(19)

(11) Veröffentlichungsnummer: **0 203 882 B1**

# EUROPÄISCHE PATENTSCHRIFT

(12)

(45) Veröffentlichungstag der Patentschrift :
**05.06.91 Patentblatt 91/23**

(51) Int. Cl.⁵ : **H04M 1/02, H04M 1/66**

(21) Anmeldenummer : **86810146.0**

(22) Anmeldetag : **26.03.86**

(54) **Telefon, insbesondere Autotelefon.**

(30) Priorität : **01.04.85 CH 1405/85**

(43) Veröffentlichungstag der Anmeldung :
**03.12.86 Patentblatt 86/49**

(45) Bekanntmachung des Hinweises auf die
Patenterteilung :
**05.06.91 Patentblatt 91/23**

(84) Benannte Vertragsstaaten :
**DE FR GB**

(56) Entgegenhaltungen :
**EP-A- 0 121 927**
**FR-A- 2 305 075**
**US-A- 3 581 019**

(73) Patentinhaber : **Peiker, Heinrich Andreas**
**Terracinaweg 5**
**W-6380 Bad Homburg v.d. Höhe (DE)**

(72) Erfinder : **Peiker, Heinrich Andreas**
**Terracinaweg 5**
**W-6380 Bad Homburg v.d. Höhe (DE)**

(74) Vertreter : **Keller, René, Dr. et al**
**Patentanwälte Hartmut Keller, Dr. René Keller**
**Postfach 12**
**CH-3000 Bern 7 (CH)**

## Beschreibung

Die Erfindung betrifft ein Telefon, insbesondere Autotelefon, gemäss dem Oberbegriff des Patentanspruchs 1.

Telefone mit Kartenlesevorrichtungen sind seit langem bekannt. Die in der Auflage des Sprechhörers angeordneten Kartenlesevorrichtungen dienen namentlich dazu, die auf einer Karte (Identitätskarte, Kodierkarte) aufgezeichnete Teilnehmernummer und/oder einen Berechtigungscode zu lesen.

Beim Stand der Technik sind zu unterscheiden einerseits die von der Erfindung gattungsmässig verschiedenen Telefone, bei denen die Auflage grösser als der Sprechhörer bemessen und der Einführungsschlitz in der oberen Seite der Auflage vorgesehen ist, und andererseits die gattungsgemässen Telefone, bei denen die Auflage gleich lang und breit oder kleiner als der Sprechhörer bemessen und der Einführungsschlitz an der Stirn- oder Seitenwand der Auflage vorgesehen ist.

Telefone der ersteren, von der Erfindung gattungsmässig verschiedenen Art sind z.B. aus der US-A-3 581 019, der FR-A-2 305 075 (DE-A-26 11 277) und dem DE-U-83 34 062 bekannt. Der Einführungsschlitz ist beim aus der US-A-3 581 019 bekannten Telefon an der Oberseite eines neben dem Sprechhörerauflagebereich befindlichen Auflageansatzes, beim aus dem DE-U-83 34 062 bekannten Telefon an der Oberseite eines den Sprechhörerauflagebereich in Längsrichtung überragenden Auflageansatzes und bei der FR-A-2 305 075 im unter der Hörmuschel des Sprechhörers befindlichen Gehäuseteil angeordnet. Einführungsschlitz und Aufnahmeraum sind bei allen diesen Telefonen so angeordnet, dass die Karte senkrecht von oben in die Auflage einführbar ist. Beim aus der FR-A-2 305 075 bekannten Telefon, bei dem zum Einführen der Karte der Sprechhörer abzuheben ist, ragt die Karte auch nach dem Einführen noch so weit aus dem Einführungsschlitz heraus, dass der Sprechhörer nicht aufgelegt werden kann, damit der Benützer daran erinnert wird, dass die Karte nach Beendigung des Gesprächs entfernt werden muss.

Telefone der letzteren, gattungsgemässen Art, sind z.B. aus der EP-A-0 121 927 (DE-A 33 13 146) bekannt. Die in der EP-A-0 121 927 beschriebenen und dargestellten Telefone haben eine etwa gleich lang und breit wie der Sprechhörer bemessene Auflage, in deren Stirn- und/oder Seitenwand der Einführungsschlitz vorgesehen und zusammen mit dem Aufnahmeraum so angeordnet ist, dass die Karte senkrecht zur Stirn- bzw. Seitenwand, d.h. horizontal in die Auflage einführbar ist.

Aufgabe der Erfindung ist es, ein Telefon, insbesondere Autotelefon zu schaffen, dessen Auflage möglichst wenig Platz beansprucht und auch in einem Ablagefach eines Kraftfahrzeugs angeordnet werden kann, und das es erlaubt, die Karte unabhängig vom Montageort der Auflage mühelos und ungehindert in diese einzuführen.

Die erfindungsgemässe Lösung dieser Aufgabe ist Gegenstand des Patentanspruchs 1. Bevorzugte Ausführungsarten sind in den Ansprüchen 2-17 umschrieben.

Im folgenden werden anhand der Zeichnung Ausführungsbeispiele der Erfindung näher beschrieben. Es zeigen :

Fig. 1 eine Seitenansicht einer teilweise geschnittenen Auflage und des zugehörigen Sprechhörers eines erfindungsgemässen Autotelefons,

Fig. 2 eine perspektivische Ansicht einer Auflage und des zugehörigen Sprechhörers eines anderen erfindungsgemässen Autotelefons,

Fig. 3 eine perspektivische Ansicht einer Auflage, die nicht den Gegenstand der Erfindung bildet, aber zur Beschreibung der Ausgestaltung von im Zusammenhang mit der Erfindung stehenden Einzelheiten der Auflage beiträgt,

Fig. 4 einen Schnitt nach der Linie IV-IV in Fig. 3 durch den mit einer Dichtungsklappe versehenen Einführungsschlitz der Auflage von Fig. 3, in grösserem Massstab,

Fig. 5 eine Draufsicht auf den linken Teil der Dichtugnsklappe in Blickrichtung V in Fig. 3, in grösserem Massstab, und

Fig. 6 eine Stirnansicht der Auflage von Fig. 3 in Blickrichtung VI in Fig. 3.

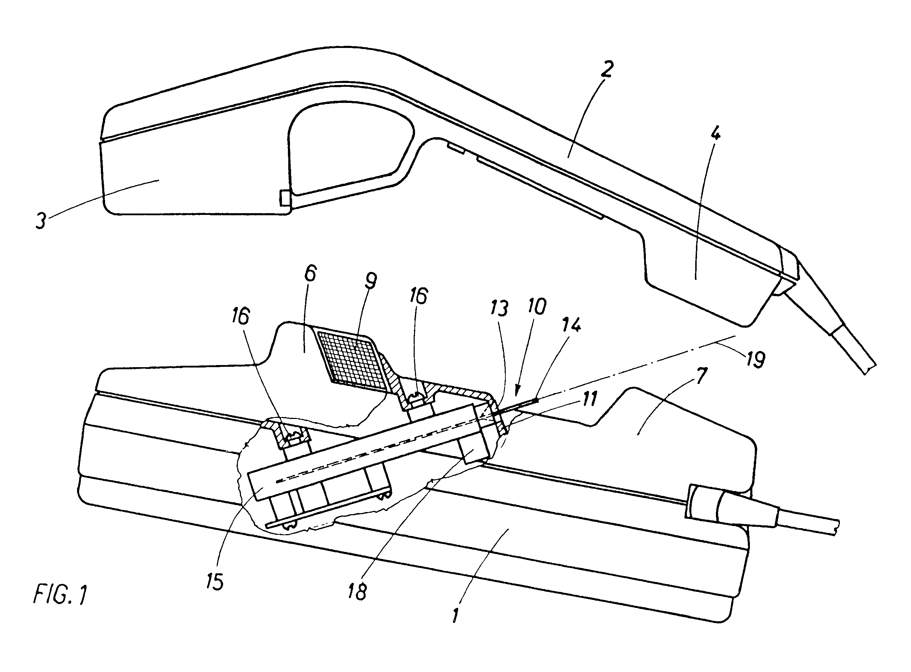

Das in Fig. 1 dargestellte Autotelefon hat eine im Fahrzeug zu montierende Auflage 1 für den Sprechhörer 2, dessen Hör- und Sprechmuschel mit 3 und 4 bezeichnet sind. Die Auflage 1 hat zwei Erhebungen 6, 7, an denen Stützflächen zum Abstützen der einander zugewandten Seiten der Hör- und Sprechmuschel 3 und 4 gebildet sind. Durch einen an der Stützfläche der Erhebung 6 angeordneten Schnappriegel und eine an der Stützfläche der Erhebung 7 angeordnete Nase ist der Sprechhörer 2 in der aufgelegten Lage an der Auflage 1 gesichert. Mittels einer Taste 9 ist der Schnappriegel ausrückbar, damit der Sprechhörer 2 abgehoben werden kann. Die Sperrund Ausrückvorrichtung ist im einzelnen im deutschen Gebrauchsmuster G 84 28 061.1 beschrieben.

Der die beiden Erhebungen 6, 7 verbindende, obere Teil der Auflage 1 weist eine Vertiefung 10 auf. In einer die Vertiefung 10 begrenzenden, geneigten Fläche 11 der Auflage 1 ist ein Einführungsschlitz 13 für eine Identitätskarte 14 vorgesehen, der senkrecht zur Auflagenlängsrichtung in einem Abstand vom Boden der Vertiefung verläuft.

Der Schlitz 13 mündet in eine einen Aufnahmeraum für die Identitätskarte 14 begrenzende Kammer 15, deren Wände als Führungswände für die Karte dienen. Statt einer Kammer kann auch ein offener Aufnahmeraum für die Karte vorgesehen sein, der seitlich durch zwei Führungsschienen für die Karte begrenzt ist. Die Aufnahmekammer 15 ist mittels Schrauben 16 an der Wandung des hohlen, aus einer oberen und unteren Schale zusammengesetzten Auflagegehäuses befestigt. Im Hohlraum der Auflage ist ferner eine (nicht näher dargestellte) Kartenlesevorrichtung angeordnet, deren Lesekopf 18 unmittelbar am dem Einführungsschlitz 13 zugewandten Ende der Aufnahmekammer 15 angeordnet ist. Die Aufnahmekammer 15 ist so geneigt angeordnet, dass die Ebene 19, in welcher die Karte 14 durch die Kammerwände geführt ist, annähernd senkrecht zur Fläche 11 verläuft. Die Neigung der Fläche 11 sowie die Anordnung des Einführungsschlitzes 13 und der Aufnahmekammer 15 sind dabei so gewählt, dass die Ebene 19, in welcher die Karte 14 durch den Einführungsschlitz 13 in die Kammer 15 einzuführen ist, in einem Abstand über die Erhebung 7 verläuft.

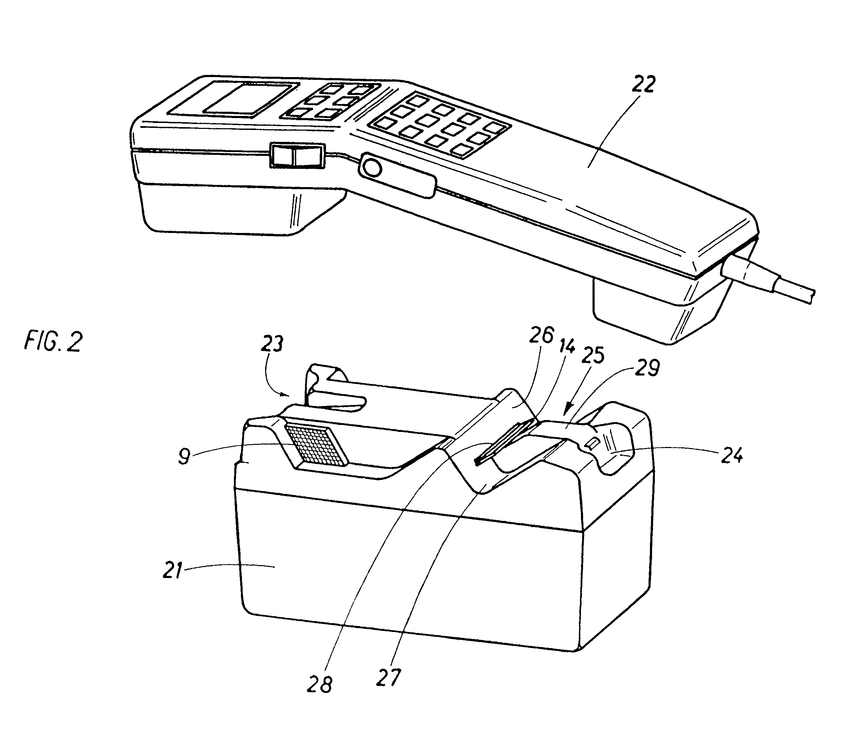

Von der in Fig. 1 dargestellten Ausführungsform, bei welcher die Auflage 1 gleich lang und etwa gleich breit wie der Sprechhörer 2 bemessen ist, unterscheidet sich die Ausführungsform von Fig. 2 zunächst dadurch, dass die Auflage 21 wesentlich kürzer als der Sprechhörer 22 bemessen ist. An den oberen Randbereichen der beiden Stirnseiten der Auflage 21 ist je eine Aussparung 23, 24 zur Aufnahme der einander zugewandten Teile der Hör- und Sprechmuschel des Sprechhörers 22 vorgesehen. Die Auflage 21 ist dabei nur gerade so lange bemessen, wie dies erforderlich ist, damit die Hör- und Sprechmuschel in den Aussparungen 23, 24 genügend seitlichen Halt finden. Im oberen Teil der Auflage 21 ist nahe der Aussparung 24 eine V-förmige Querrinne 25 gebildet. In der in Fig. 2 linken Rinnenwand 26 ist ein in einem Abstand parallel zum Rinnenboden 27 verlaufender Einführungsschlitz 28 für die Identitätskarte 14 vorgesehen. Zwischen dem Schlitz 28 und dem Rinnenboden 27 ist ein Stützorgan 29 angeordnet, das eine an den mittleren Bereich des unteren Randes des Schlitzes 28 anschliesende, senkrecht zur Rinnenwand 26 stehende Stützfläche hat. Die Stützfläche des gegenüber der Kartenbreite schmalen Stützorgangs 29 erleichtert das Einführen der Karte 14 in den Schlitz 28. In der Auflage 21 ist in derselben Weise wie in der Auflage 1 eine Aufnahmekammer und eine Kartenlesevorrichtung angeordnet (nicht dargestellt).

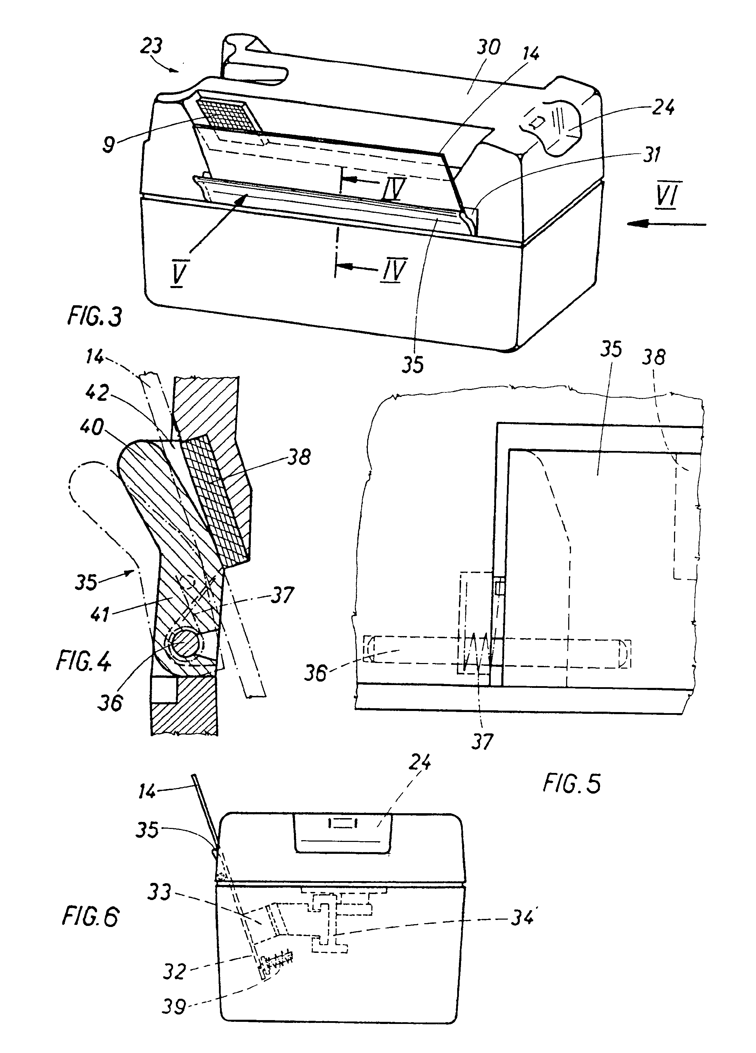

Bei der in Fig. 3 dargestellten Variante ist der Einführungsschlitz 31 für die Karte 14 am oberen Teil einer der beiden Längsseiten der Auflage 30 angeordnet. Im Gegensatz zu den der Breite der Karte angepassten Einführungsschlitzen 13, 28 ist der Einführungsschlitz 31 der Länge der Karte angepasst. Die Führungswände oder -schienen der an den Einführungsschlitz 31 anschliessenden Aufnahmekammer 32 verlaufen vom Einführungsschlitz 31 geneigt nach unten. Der Neigungswinkel ist möglichst gross gewählt; im Beispiel beträgt er 70°. Die in der Auflage 30 angeordnete Kartenlesevorrichtung hat einen Lesekopf 33, dessen Halter verschiebbar an einer parallel zur Schlitzlängsrichtung verlaufenden Führungsschiene 34 gelagert ist. Zum Lesen der Karte 14 wird der Halter mittels einer (nicht dargestellten) Antriebsvorrichtung längs der Führungsschiene 34 bewegt, wobei der Lesekopf 33 entlang dem in Kartenlängsrichtung verlaufenden Aufzeichnungsträger (der Magnetspur bei einer Magnetkarte) läuft. Um sicherzustellen, dass die Karte in der richtigen Leseposition ist, d.h. der Aufzeichnungsträger auf der Höhe des Lesekopfs 33 liegt, ist am dem Einführungsschlitz 31 abgewandten Endteil der Aufnahmekammer 32 ein durch eine Feder belasteter Stift 39 angeordnet, der in ein Loch der Karte 14 eingreift, wenn diese in ihre Endlage geschoben ist, in der ein zum wieder Herausziehen der Karte 14 noch ausreichender Randabschnitt aus dem Einführungsschlitz 28 über die Klappe 35 vorsteht. Beim Eingreifen betätigt der Stift 39 einen Schalter der Kartenlesevorrichtung, wodurch die Auslösung des Lesevorgangs mittels der Tastatur des Sprechhörers 22 ermöglicht wird.

Damit kein Staub, Asche oder dgl. durch den Schlitz 31 in die Aufnahmekammer 32 gelangen kann, ist am Schlitz eine Staubschutzklappe 35 angeordnet. Die Klappe 35 ist schwenkbar auf an beiden Längsenden des Schlitzes 31 in der Seitenwand der Auflage 30 sitzenden Lagerbolzen 36 gelagert und durch je eine Feder 37 an den inneren Teil eines Filzbands 38 gedrückt, das den Schlitz 31 an der Seite begrenzt, an welcher der Aufzeichnungsträger (die Magnetspur) der Karte vorbeizuführen ist. Das Filzband 38 dient als Abstreiforgan zum Abstreifen von Staub und dgl. vom Aufzeichnungsträger.

Die Klappe 35 hat einen Ansatz 40, der stumpfwinklig von dem an den Bolzen 36 gelagerten Teil 41 der Klappe abgebogen ist. Am inneren Teil des Filzbands 38 liegt der zwischen dem Ansatz 40 und dem Teil 41 gebildete Scheitelbereich der Klappe 35 an. Der Ansatz 40 begrenzt zusammen mit dem äusseren Teil des Filzbands 38 einen sich keilförmig nach aussen erweiternden Spalt 42. Beim Einführen der Karte 14 in den Spalt 42 drückt diese die Klappe 35 gegen der Kraft der Federn 37 nach aussen in die strichpunktiert dargestellte Lage, wodurch der Einführungsschlitz freigegeben wird. Die federbelastete Klappe 35 gewährleistet dabei, dass der Aufzeichnungsträger der Karte 14 dicht am Filzband 38 vorbeigleitet, so dass Staub oder dgl. von ihm abgestreift wird. Durch den von der Seitenwand der Auflage 30 nach aussen abstehenden Ansatz 40 der Klappe 35 wird das Einführen der Karte 14 in den Schlitz (die "Schlitzfindung") erleichtert.

Die Einführungsschlitze 13, 28 der Auflagen 1 und 21 können ebenfalls mit einem Staubschutzorgan sowie einem Abstreiforgan ausgerüstet werden. Als Staubschutzorgan können z.B. auch elastische Dichtlippen oder Borstenkörper vorgesehen sein.

Die Aufnahmekammer 15 kann statt nach hinten, d.h. zur Sprechmuschelauflage hin geneigt, auch nach vorne, d.h. zur Hörmuschelauflage hin geneigt sein. Dabei verläuft die Ebene 19 in einem Abstand über der Erhebung 6. Entsprechend kann auch die Aufnahmekammer in der Auflage 21 umgekehrt geneigt sein, so dass die Karte schräg von vorne einführbar ist.

Um das Einführen der Karte bei Dunkelheit zu erleichtern, können eine oder mehrere Leuchtdioden in den Wänden des Aufnahmeraums angeordnet sein. Die Anordnung wird dabei vorzugsweise so getroffen, dass sich eine gleichmässige, diffuse Beleuchtung des Einführungsschlitzes ergibt.

Als Karten können magnetisch, elektrisch oder optisch lesbare Karten, z.B. auch sog. Chip-Karten usw. verwendet werden.

## Ansprüche

1. Telefon, insbesondere Autotelefon, mit einem Sprechhörer (2 ; 22) und einer etwa gleich lang und breit oder kleiner als dieser bemessenen Auflage (1 ; 28 ; 31), in der ein Einführungsschlitz (13 ; 28 ; 31), ein Aufnahmeraum (15 ; 32) und eine Lesevorrichtung (18 ; 33) für eine Karte (14) angeordnet sind, dadurch gekennzeichnet, dass der Einführungsschlitz (13 ; 28 ; 31) an der vom aufgelegten Sprechhörer (2 ; 22) überdeckten Oberseite der Auflage (1 ; 28 ; 31) in einem eine geneigte Fläche (11 ; 26) aufweisenden Teil der Oberseite vorgesehen und zusammen mit dem Aufnahmeraum (15 ; 32) so angeordnet ist, dass die Karte (14) nach Abnehmen des Sprechhörers (2 ; 22) schräg von oben in die Auflage (1 ; 21 ; 30) einführbar ist.

2. Telefon nach Anspruch 1, bei welchem die Auflage (1 ; 21) zwei die einander zugewandten Seiten der Hör und Sprechmuschel (3, 4) abstützende Stützflächen (6, 7 ; 23, 24) hat, dadurch gekennzeichnet, dass der Einführungschlitz (13 ; 28) zwischen den beiden Stützflächen (6, 7 ; 23, 24) angeordnet ist.

3. Telefon nach Anspruch 2, dadurch gekennzeichnet, dass die Auflage (1 ; 21) zwischen den beiden Stützflächen (6, 7 ; 23, 24) eine Vertiefung (10 ; 25) aufweist, der Einführungsschlitz (13 ; 28) in einer die Vertiefung (10 ; 25) begrenzenden, geneigten Fläche (11 ; 26) der Auflage angeordnet ist und eine den Aufnahmeraum begrenzende Kartenführung (15) wenigstens annähernd senkrecht zur geneigten Fläche (11 ; 26) verläuft.

4. Telefon nach Anspruch 3, dadurch gekennzeichnet, dass der Einführungsschlitz (28) in einem Abstand vom Boden (27) der Vertiefung (25) angeordnet und zwischen dem Schlitz (28) und dem Boden (27) ein schmaler als die Schlitzlänge ausgebildetes Stützorgan (29) angeordnet ist, das eine an den mittleren Bereich des unteren Randes des Schlitzes (28) anschliessende, wenigstens annähernd senkrecht zur geneigten Fläche (26) stehende Stützfläche für die Karte (14) hat.

5. Telefon nach Anspruch 1, dadurch gekennzeichnet, dass der Einführungsschlitz (31) am oberen Teil einer der beiden Längsseitenwände der Auflage (30) angeordnet ist, und eine den Aufnahmeraum begrenzende Kartenführung (32) vom Einführungsschlitz (31) nach unten geneigt verläuft.

6. Telefon nach Anspruch 5, dadurch gekennzeichnet, dass der Neigungswinkel der Kartenführung (32) mindestens 45°, vorzugsweise etwa 70° beträgt.

7. Telefon nach einem der Ansprüche 1 bis 6, dadurch gekennzeichnet, dass die Auflage (21 ; 30) kürzer als der Sprechhörer (22) ist und an den oberen Randbereichen ihrer beiden Stirnseiten je eine Aussparung (23, 24) zur Aufnahme der einander zugewandten Teile der Hör- und Sprechmuschel aufweist.

8. Telefon nach einem der Ansprüche 1 bis 7, dadurch gekennzeichnet, dass am Einführungsschlitz (31) ein Staubschutzorgan (35) angeordnet ist.

9. Telefon nach Anspruch 8, dadurch gekennzeichnet, dass das Staubschutzorgan wenigstens eine elastische Dichtlippe aufweist.

10. Telefon nach Anspruch 8, dadurch gekennzeichnet, dass das Staubschutzorgan wenigstens einen Borstenkörper aufweist.

11. Telefon nach Anspruch 8, dadurch gekennzeichnet, dass das Staubschutzorgan eine durch eine Feder (37) an einen inneren Teil einer Begrenzungsfläche (38) des Einführungsschlitzes (31) gedrückte Staubschutzklappe (35) ist, an deren an der Begrenzungsfläche (38) anliegenden Teil ein Ansatz (40) gebildet ist, der zusammen mit dem äusseren Teil der Begrenzungsfläche (38) einen sich keilförmig nach aussen erweiternden Spalt (42) begrenzt.

12. Telefon nach einem der Ansprüche 1 bis 11, dadurch gekennzeichnet, dass wenigstens an der Begrenzungsfläche des Einführungsschlitzes (31), an welcher der Aufzeichnungsträger der Karte (14) vorbeizuführen ist, ein Abstreiforgan (38), z.B. ein Filz, zum Abstreifen von Staub u. dgl. angeordnet ist.

13. Telefon nach den Ansprüchen 11 und 12, dadurch gekennzeichnet, dass das Abstreiforgan (38) wenigstens den Teil der Begrenzungsfläche bildet, an welchen die Staubschutzklappe (35) durch die Feder (37) gedrückt ist.

14. Telefon nach einem der Ansprüche 1 bis 13, dadurch gekennzeichnet, dass die Kartenlesevorrichtung einen Lesekopf (18) hat, der unmittelbar am an den Einführungsschlitz (13 ; 28) anschliessenden Teil des Aufnahmeraumes (15) angeordnet ist.

15. Telefon nach einem der Ansprüche 1 bis 13, dadurch gekennzeichnet, dass die Kartenlesevorrichtung einen Lesekopf (33) hat, der verschiebbar an einer Führungsschiene (34) gelagert ist.

16. Telefon nach einem der Ansprüche 1 bis 15, dadurch gekennzeichnet, dass am dem Einführungsschlitz (31) abgewandten Endteil des Aufnahmeraums (32) ein durch eine Feder belasteter Stift (39) angeordnet ist.

17. Telefon nach einem der Ansprüche 1 bis 16, gekennzeichnet durch wenigstens eine Leuchte, welche den Aufnahmeraum so beleuchtet, dass diffuses Licht aus dem Einführungsschlitz austritt.

## Claims

1. A telephone, particularly a car telephone, with a combined mouthpiece/earpiece (2, 22) and a substantially equally long and wide or smaller rest (1, 28, 31) in which there are an insertion slot (13, 28, 31), a housing space (15, 32) and a reading device (18, 33) for a card (14), characterised in that the insertion slot (13, 28, 31) is provided on the upper side of the rest (1, 28, 31) which is masked when the mouthpiece/earpiece (2, 22) is placed on it, the slot being so disposed in a part of the top which comprises an inclined surface (11, 26) and together with the housing space (15, 32) that when the mouthpiece/earpiece (2, 22) is removed, the card (14) can be inserted obliquely in the rest (1, 21, 30) from above.

2. A telephone according to Claim 1, in which the rest (1, 2) has two supporting faces (6, 7 ; 23, 24) which support the mutually facing sides of the earpiece and mouthpiece (3, 4), characterised in that the insertion slot (13, 28) is disposed between the two supporting surfaces (6, 7 ; 23, 24).

3. A telephone according to Claim 2, characterised in that the rest (1, 2) has between the two supporting surfaces (6, 7 ; 23, 24) a depression (10, 25), the insertion slot (13, 28) is disposed in an inclined surface (11, 25) of the rest which bounds the depression (10, 25) and in that a card guide (15) defining the housing space extends at least approximately at right-angles to the inclined surface (11, 26).

4. A telephone according to Claim 3, characterised in that the insertion slot (28) is disposed at a distance from the bottom (27) of the depression (25) and in that between the slot (28) and the bottom (27) there is a narrow bracing member (29) which is constructed to be narrower than the length of the slot and which has, adjacent the middle portion of the bottom edge of the slot (28), a bracing surface for the card (14) extending at least approximately at a right-angle to the inclined surface (26).

5. A telephone according to Claim 1, characterised in that the insertion slot (31) is disposed at the upper part of one of the two longitudinal side walls of the rest (30) and in that a card guide (32) defining the housing space is inclined downwardly from the insertion slot (31).

6. A telephone according to Claim 5, characterised in that the angle of inclination of the card guide (32) amounts to at least 45° and preferably about 70°.

7. A telephone according to one of Claims 1 to 6, characterised in that the rest (21, 30) is shorter than the mouthpiece/earpiece (22) and has at the upper marginal zones of its two end faces in each case one recess (23, 24) to accommodate the mutually facing parts of the earpiece and mouthpiece.

8. A telephone according to one of Claims 1 to 7, characterised in that a dust guard (35) is disposed on the insertion slot (31).

9. A telephone according to Claim 8, characterised in that the dust guard comprises at least one elastic sealing lip.

10. A telephone according to Claim 8, characterised in that the dust guard has at least one bristle member.

11. A telephone according to Claim 8, characterised in that the dust guard is a dust-protective flap (35) pressed by a spring (37) against an inner part of a surface (38) bounding the insertion slot (31), there being formed on the part which rests on the boundary surface (38) a projection (40) which together with the outer part of the boundary surface (38) defines a gap (32) which widens outwardly in a wedge shape.

12. A telephone according to one of Claims 1 to 11, characterised in that at least on the boundary surface of the insertion slot (31) past which the recording carrier of the card (14) is to pass, there is a wiper member (38), for example a piece of felt, for wiping off dust and the like.

13. A telephone according to Claims 11 and 12, characterised in that the wiper member (38) forms at least the part of the boundary surface against which the dust-protective flap (35) is pressed by the spring (37).

14. A telephone according to one of Claims 1 to 13, characterised in that the card reading device has a reading head (18) disposed directly on the part of the housing space (15) which is adjacent the insertion slot (13, 28).

15. A telephone according to one of Claims 1 to 13, characterised in that the card reading device comprises a reading head (33) mounted in displaceable manner on a guide rail (34).

16. A telephone according to one of Claims 1 to 15, characterised in that on the end part of the housing space (32) which is remote from the insertion slot (31) there is a spring-loaded pin (39).

17. A telephone according to one of Claims 1 to 16, characterised by at least one lamp which so illuminates the housing space that diffused light emerges from the insertion slot.

## Revendications

1. Téléphone, notamment téléphone de voiture comprenant un combiné (2 ; 22), ainsi qu'un socle (1 ; 28 ; 31) dimensionné d'une longueur et d'une largeur sensiblement égales ou inférieures à celles dudit combiné, et dans lequel se trouvent une fente d'introduction (13 ; 28 ; 31), un logement (15 ; 32) et un dispositif de lecture (18 ; 33) associés à une carte (14), caractérisé par le fait que la fente d'introduction (13 ; 28 ; 31) est prévue à la face supérieure du socle (1 ; 28 ; 31) recouverte par le combiné raccroché (2 ; 22), dans une partie de ladite face supérieure qui présente une surface inclinée (11 ; 26), et est disposée, conjointement au logement (15 ; 32), de façon telle que la carte (14) puisse être introduite à l'oblique de haut en bas dans le socle (1 ; 21 ; 30) après décrochage du combiné (2 ; 22).

2. Téléphone selon la revendication 1, dans lequel le socle (1 ; 21) présente deux surfaces d'appui (6, 7 ; 23, 24) soutenant les côtés, mutuellement opposés, des coquilles d'écouteur et de microphone (3, 4), caractérisé par le fait que la fente d'introduction (13 ; 28) se trouve entre les deux surfaces d'appui (6, 7 ; 23, 24).

3. Téléphone selon la revendication 2, caractérisé par le fait que le socle (1 ; 21) présente un renfoncement (10 ; 25) entre les deux surfaces d'appui (6, 7 ; 23, 24) ; la fente d'introduction (13 ; 28) est ménagée dans une surface inclinée (11 ; 26) du socle, qui délimite le renfoncement (10 ; 25) ; et un guide-carte (15), délimitant le logement, s'étend au moins à peu près perpendiculairement à la surface inclinée (11 ; 26).

4. Téléphone selon la revendication 3, caractérisé par le fait que la fente d'introduction (28) se trouve à distance du fond (27) du renfoncement (25), avec interposition, entre la fente (28) et le fond (27), d'une pièce de soutien (29) qui est réalisée plus étroite que la longueur de la fente et qui présente, pour la carte (14), une surface d'appui se rattachant à la région centrale du bord inférieur de ladite fente (28), et s'étendant au moins à peu près perpendiculairement à la surface inclinée (26).

5. Téléphone selon la revendication 1, caractérisé par le fait que la fente d'introduction (31) est ménagée sur la partie supérieure de l'une des deux parois latérales longitudinales du socle (30) ; et un guide-carte (32), délimitant le logement, s'étend à l'oblique vers le bas à partir de la fente d'introduction (31).

6. Téléphone selon la revendication 5, caractérisé par le fait que l'angle d'inclinaison du guide-carte (32) mesure au moins 45°, de préférence environ 70°.

7. Téléphone selon l'une des revendications 1 à 6, caractérisé par le fait que le socle (21 ; 30) est plus court que le combiné (22) et comporte, dans les régions marginales supérieures de ses deux faces extrêmes, une échancrure respective (23, 24) pour recevoir les parties, se faisant mutuellement face, des coquilles d'écouteur et de microphone.

8. Téléphone selon l'une des revendications 1 à 7, caractérisé par le fait qu'un organe (35) de protection anti-poussière est installé sur la fente d'introduction (31).

9. Téléphone selon la revendication 8, caractérisé par le fait que l'organe de protection anti-poussière présente au moins une lèvre élastique d'étanchéité.

10. Téléphone selon la revendication 8, caractérisé par le fait que l'organe de protection anti-poussière présente au moins un corps muni de brosses.

11. Téléphone selon la revendication 8, caractérisé par le fait que l'organe de protection anti-poussière est un volet anti-poussière (35) pressé, par un ressort (37), contre une partie intérieure d'une surface (38) de délimitation de la fente d'introduction (31), un appendice (40), ménagé sur la partie dudit volet qui est appliquée contre la surface de délimitation (38), délimitant un interstice (42) à évasement cunéiforme vers l'extérieur en association avec la partie extérieure de ladite surface de délimitation (38).

12. Téléphone selon l'une des revendications 1 à 11, caractérisé par le fait qu'un organe racleur (38), par exemple un feutre destiné à éliminer par raclement de la poussière et substances similaires, est disposé au moins sur la surface de délimitation de la fente d'introduction (31) en regard de laquelle le substrat d'inscription de la carte (14) doit défiler.

13. Téléphone selon les revendications 11 et 12, caractérisé par le fait que l'organe racleur (38) forme au moins la partie de la surface de délimitation contre laquelle le volet anti-poussière (35) est pressé par le ressort (37).

14. Téléphone selon l'une des revendications 1 à 13, caractérisé par le fait que le dispositif lecteur de cartes possède une tête de lecture (18) directement située sur la partie du logement (15) qui se rattache à la fente d'introduction (13 ; 28).

15. Téléphone selon l'une des revendications 1 à 13, caractérisé par le fait que le dispositif lecteur de cartes possède une tête de lecture (33) montée coulissante sur une glissière de guidage (34).

16. Téléphone selon l'une des revendications 1 à 15, caractérisé par le fait qu'une cheville (39), chargée par un ressort, est installée sur la partie extrême du logement (32) qui est tournée à l'opposé de la fente d'introduction (31).

17. Téléphone selon l'une des revendications 1 à 16, caractérisé par au moins une lampe, qui éclaire le logement de telle sorte que de la lumière diffuse sorte de la fente d'introduction.

FIG. 1

EP 0 203 882 B1

FIG. 2

EP 0 203 882 B1

FIG.3

FIG.4

FIG.5

FIG.6